# EUROPEAN PATENT SPECIFICATION

(11) **EP 2 031 616 B1**
(45) Date of publication and mention of the grant of the patent: **23.09.2015**
(21) Application number: 08163054.3
(22) Date of filing: 27.08.2008
(51) Int. Cl.: H01H 9/18, H01H 13/83, G06F 3/02, G06F 1/16

(54) **Keypad with light-reflecting keys providing uniform visibility**
Tastenblock mit lichtreflektierenden Tasten für eine gleichmäßige Sichtbarkeit
Clavier doté de touches réfléchissantes fournissant une visibilité uniforme

(30) Priority: 28.08.2007 TR 200705956
(43) Date of publication of application: 04.03.2009
(73) Proprietor: Vestel Elektronik Sanayi ve Ticaret A.S., 45030 Manisa (TR)
(72) Inventor: Basarir, Cenk, Vestel Elektronik Sanayi ve Ticaret A.S., 45030, MANISA (TR)
(74) Representative: Cayli, Hülya

(56) References cited:
- EP-A1- 1 724 800
- CN-Y- 2 651 832
- JP-A- 2003 217 381
- US-A- 4 597 681
- US-A1- 2004 081 503

## Description

### Technical Field

The present invention relates to a keyboard or keypad which enhances the visibility of characters provided on the keys thereof and is used in electronic devices under low illumination conditions and provides a uniform visibility of such characters.

### Prior Art

Many methods have been employed for enhancing the visibility of characters (letters, figures, numbers, punctuation marks, words, and figure-like symbols used to indicate the function of the respective key) provided on the keys of keyboards of electronic devices such as computers. Said methods may be reviewed under two sections, depending on the active and passive illumination systems.

In active illumination systems, the light sources are directly used for illuminating the keys on the keyboard. The main methods employed in these systems are as follows:
- directly illuminating the keys by means of a light source external of the respective keyboard,
- enhancing the visibility of keys by means of one or more light source(s) provided under the keys internal of the keyboard, and
- illuminating the keys by making use of light guides (e.g. fiber optic cables) from a light source internal or external of the keyboard.

Since such active illuminating systems require light sources, they need electricity power. Therefore energy must be consumed for enhancing the visibility of characters on the keys of such keyboards.

In passive illuminating systems, no special light sources are used for illuminating the keys on the keyboards. The main methods employed in these systems are as follows:
- the use of materials (such as phosphorous) in the keys of keyboards, such light-emitting materials storing energy with the light they directly receive from light sources,
- reflecting the light emitted from components used for other purposes (e.g. displays of laptop computers), except the keyboard itself, via the keys of the keyboard.

The keys in which such energy-storing and light-emitting materials (such as phosphorous) are used ensure a uniform visibility. Put differently, no difference is observed among the keys with respect to visibility in keyboards at which such materials are utilized on the keys. On the other hand, since the frequency of the light emitted from such materials is high, it becomes diffracted to a substantial extent. This diffraction prevents the light from propagating in straight lines due to peripheral effects and therefore the legibility of a character on a key generally fails in meeting satisfactory levels. Additionally, it is more difficult for the human eye to perceive the lights with higher frequency as compared to those of normal frequency.

The intensity of light emitted from materials used in such keys is proportional to the energy they store. Therefore the intensity of light emitted from such materials decreases gradually.

Furthermore, such materials require light for storing energy. Therefore such type of keyboard which has not been exposed to light for relatively longer time periods looses its visibility.

The method used in systems, in which the light emitted from components for other purposes (e.g. displays of laptop computers), except the keyboard itself, is reflected by the keys on the keyboard require such keys be manufactured from materials of high reflectivity.

In addition to manufacturing such type of keys from highly-reflective materials, it is also feasible to coat the upper visible surface of keys with such highly-reflective materials. Another method used in such systems is based on manufacturing the characters on the keys of keyboards or keypads from highly light-reflecting materials. A first example disclosing a keyboard according to the preamble of claim 1 is known from JP-2003 217 381.

An example illustrating this method is the patent application US20040067087A1. In this patent, a metallic material is used for this purpose. Another example illustrating a similar method is the patent application US20040081503A1. In this patent, a polyester material is used for this purpose.

The methods disclosed in both of these patens relate to light-reflecting methods, which provide the basis of the present invention as well. The basic notion in said patents, however, is ensuring reflectivity, and does not solve the problems experienced in the reflection method. The most important one of these problems is that the characters on the keys of keyboards reflect light at different extents, depending on their distance to the light-emitting element, and their position and angles with respect to this element. This difference impairs the uniform visibility among the characters on the keys of a keyboard.

Additionally, said patents do not take into consideration the distance of keys to the user and to the light source. Because of this distance, lights reflected from different keys are subjected to losses at different extents. This fact decreases the uniform visibility of the keys in such keyboards.

### Objective of Invention

The system disclosed in the present invention aims at solving the uniform visibility problem encountered in those systems, in which the light emitted from a light source external of the keyboard or from a light-emitting component used for another purpose is reflected by the keys of the keyboard.

### Description of Invention

The basic notion used while the system according to the present invention is embodied is to provide a uniform visibility for the characters provided on the keys of a keyboard, by arranging the light emitted from the keys of keyboards so that the character of each key is perceived by the user identically.

The reflection on keys is provided by making use of reflective surfaces. Although the reflective surfaces are different from the material from which the key is made, it is also possible to use the surface of the key itself as the reflective surface. Said reflective surface can either cover the surface of the key entirely, or it can be made from the material used in making the characters on the key. Said materials include, but are not restricted to light-reflective materials such as metals, plastics, glasses, polyesters, etc.

The basic problems to be taken into account while making use of the light emitted from components for other purposes (e.g. the display of laptop computers), except the keyboard itself, or while making use of the light emitted from an external light source so as to reflect this light by the keys on the keyboard for providing the characters on the keys of such keyboard with uniform visibility are that
- the distance between the light source and the key,
- the location and angular position of the key with respect to the light source, and
- the distance between the key and the user,
are distinct for each key on the keyboard.

The distance between the light source and the key leads to differences at the amount of light, which comes from the light source and is reflected by the key.

The location and angular position of the key with respect to the light source influence the reflection direction of light that comes from the light source and is reflected by the key.

The distance between the key and the user is effective in the visibility of key by the user.

Each method employed in embodying the system under the present invention allows balancing the amount of light of the characters on the keys of the keyboard reflected from the keys to the user depending on the distance between the light source and the user.

One or more than one method can be used while embodying the system according to the present invention. The main of these methods, making use of preferred implementations, are disclosed hereunder.

One of the preferred implementations of the system according to the present invention which is defined by appended claim 1, is to make use of the reflective surface (i.e. light-reflecting materials used) on the keys which are close to the light source with less efficiency, and on the contrary, to make use of the reflective surface on the keys which are situated farther to the light source with more efficiency.

In such an implementation, the size of the reflective surface on the key may be adjusted according to the location of the key on the keyboard.

For this purpose, the reflective surfaces used in forming the characters composed of light-reflecting materials or the reflective surfaces provided on the keys for the characters situated closer to the light source may be formed with finer lines as compared to those characters located farther from the light source.

For the same purpose, the reflective surfaces used in forming the characters composed of light-reflecting materials or the reflective surfaces provided on the keys for the characters situated closer to the light source may be formed in a less intensive fashion as compared to those characters located farther from the light source.

With respect to the same preferred implementation, the reflective surfaces used in forming the characters composed of light-reflecting materials or the reflective surfaces provided on the keys for the characters situated closer to the light source may be formed in a more textured fashion as compared to those characters located farther from the light source.

Another method of adjusting the reflection on the keys is using different materials on the reflective surfaces on keys. Thus, it is feasible to obtain keys with different reflection characteristics depending on the differences provided on the reflective surfaces.

In a preferred implementation of the system according to the present invention, the positioning angles of the keys are varied among themselves in their current outlay, taking into account their positions with respect to the light source and the user.

The problem here in providing a uniform visibility and the matter to be taken into account are that if the light source is assumed to be in front of the keyboard, the light reflected by the characters on the keys positioned in the central part of the keyboard is perceived more visibly by the user as compared to the light reflected by the characters on the keys positioned laterally on the keyboard. Even if the amount of light reflected by each key is the same, the fact that the light beams coming from the light source and reflected by the characters on the keys have different reflection directions and angles creates the basis of the difference of the amounts of light reaching to the user.

In this preferred implementation solving this problem, different key positioning methods are used in order to properly adjust the reflection angles. One of these methods may make use of the central point of the light source and the user's eye position as a reference. Accordingly, the criterion to be taken into account while positioning a key of the keyboard is to adjust the reflective surface on the key so that a beam assumed to come from the central point of a light source -which is deemed to be the efficient illumination point- can arrive at the user's eye once being reflected by the key. This adjustment can be made either by processing the material used for reflection purposes, or by arranging the key's angle at the current position so as to realize said operation.

In an embodiment with a keyboard of such preferred system, the keys located at the lateral sides may be inclined to the central part.

Similarly, the keys closer to the light source and those farther from the light source can be arranged so as to have different positioning angles at the light source-user direction.

The system according to the present invention can particularly be implemented on laptop computers. The display can be used as the source of light in laptop computers. The system according to the present invention, can nevertheless be used in any kind of devices equipped with a keyboard or keypad.

The uniform visibility problem of characters on the keys of keyboards or keypads which is solved by the system according to the present invention may be eliminated by means of such preferred systems and the methods employed in such preferred systems may be combined, therefore the system according to the present invention is open for further improvements and/or developments.

## Claims

1. A keypad or keyboard, which is suitable to be implemented on laptop computers having a display, and comprising the keys reflecting beams coming from a light source, wherein said display of laptop computer is used as light source and the keys on said keypad or keyboard have distinct reflection characteristics according to locations of the keys on the keypad or keyboard wherein
said keys have a reflective surface for providing reflectivity on the key and **characterized in that**
the keys which are located close to the light source reflect light less efficiently than the keys located farther to the light source where said keys are uniformly visible as perceived by the user.

2. A keypad or keyboard according to Claim 1, **characterized in that** said reflective surface forms the character on the key.

3. A keypad or keyboard according to Claim 1, **characterized in that** said reflective surface covers the key itself, without forming the character on the key.

4. A keypad or keyboard according to Claim 1, **characterized in that** said reflective surface is made from a metallic material.

5. A keypad or keyboard according to Claim 1, **characterized in that** said reflective surface is made from a plastic material.

6. A keypad or keyboard according to Claim 1, **characterized in that** said reflective surface is made from a glass material.

7. A keypad or keyboard according to Claim 1, **characterized in that** the reflective surface provided on some of said keys are more textured as compared to the reflective surfaces provided on other keys.

8. A keypad or keyboard according to Claim 1, **characterized in that** the material used on the reflective surface of some keys is not as intensive as provided on the reflective surface of other keys.

9. A keypad or keyboard according to Claim 1, **characterized in that** the reflective surface provided on some of said keys occupies less area as compared to other reflective surfaces provided on other keys.

10. A keypad or keyboard according to Claim 1, **characterized in that** different materials are used on the reflective surfaces on the keys of the keyboard.

11. A keypad or keyboard according to claim 1, **characterized in that** the keys of the keyboard are provided with individual positioning angles depending on their individual location on the keyboard.

12. A keypad or keyboard according to Claim 11, **characterized in that** the keys at the lateral sides of the keyboard are inclined towards the center and are provided with proper positioning angles for this purpose.

13. A keypad or keyboard according to Claim 11, **characterized in** being a keyboard comprising keys provided with positioning angles which allow the light coming from the central point of said light source to arrive at the user's eye.

## Patentansprüche

1. **Tastatur** (keypad oder keyboard), geeignet um auf Laptop-Computern mit Bildschirm implementiert zu werden, und mit Tasten, die von einer Lichtquelle stammende Strahlen reflektieren, wobei der Bildschirm des Laptop-Computers als Lichtquelle verwendet wird und die Tasten der Tastatur spezifische Reflexionscharakteristika entsprechend der Lage der Tasten auf der Tastatur, wobei die Tasten eine reflektierende Oberfläche aufweisen, um Reflexion auf den Tasten bereitzustellen, **dadurch gekennzeichnet, dass** die Tasten, die nahe der Lichtquelle angeordnet sind, Licht weniger effizient reflektieren als die Tasten, die der Lichtquelle entfernter angeordnet sind, wobei die Tasten von einem Benutzer als einheitlich sichtbar wahrgenommen werden.

2. Tastatur nach Anspruch 1, **dadurch gekennzeichnet, dass** die reflektierende Oberfläche das Zeichen auf der Taste bildet.

3. Tastatur nach Anspruch 1, **dadurch gekennzeichnet, dass** die reflektierende Oberfläche die Taste bedeckt, ohne das Zeichen auf der Taste zu bilden.

4. Tastatur nach Anspruch 1, **dadurch gekennzeichnet, dass** die reflektierende Oberfläche aus Metall besteht.

5. Tastatur nach Anspruch 1, **dadurch gekennzeichnet, dass** die reflektierende Oberfläche aus Kunststoff besteht.

6. Tastatur nach Anspruch 1, **dadurch gekennzeichnet, dass** die reflektierende Oberfläche aus Glas besteht.

7. Tastatur nach Anspruch 1, **dadurch gekennzeichnet, dass** die reflektierende Oberfläche auf einigen (some) der Tasten texturierter ist, verglichen mit der reflektierenden Oberfläche auf anderen Tasten.

8. Tastatur nach Anspruch 1, **dadurch gekennzeichnet, dass** das Material auf der reflektierenden Oberfläche einiger Tasten nicht so intensiv ist wie die reflektierende Oberfläche auf anderen Tasten.

9. Tastatur nach Anspruch 1, **dadurch gekennzeichnet, dass** die reflektierende Oberfläche auf einigen Tasten eine geringere Fläche bedeckt, verglichen zu anderen reflektierenden Oberflächen auf anderen Tasten.

10. Tastatur nach Anspruch 1, **dadurch gekennzeichnet, dass** verschiedene Materialien auf den reflektierenden Oberflächen auf den Tasten der Tastatur verwendet werden.

11. Tastatur nach Anspruch 1, **dadurch gekennzeichnet, dass** die Tasten der Tastatur mit individuellen Positionierwinkeln angeordnet sind, abhängig von deren individueller Lage auf der Tastatur.

12. Tastatur nach Anspruch 11, **dadurch gekennzeichnet, dass** die Tasten auf lateralen Seiten der Tastatur in Richtung der Mitte geneigt sind und mit für diesen Zweck geeigneten Positionierwinkeln angeordnet sind.

13. Tastatur nach Anspruch 11, **dadurch gekennzeichnet, dass** diese eine Tastatur ist, mit Tasten, die mit Positionierwinkeln angeordnet sind, die es dem Licht, das von dem zentralen Punkt der Lichtquelle stammt, ermöglichen an einem Auge des Benutzers anzukommen.

## Revendications

1. Pavé numérique ou clavier, qui est adapté pour être implémenté sur des ordinateurs portables ayant une unité d'affichage, et comprenant les touches réfléchissant les faisceaux émanant d'une source de lumière, dans lequel ladite unité d'affichage de l'ordinateur portable est utilisée en tant que source de lumière et les touches sur ledit pavé numérique ou clavier ont des caractéristiques de réflexion distinctes en fonction des emplacements des touches sur le pavé numérique ou clavier,
dans lequel lesdites touches ont une surface réfléchissante pour fournir la réflectivité sur la touche, et **caractérisé en ce que**
les touches qui sont situées près de la source de lumière réfléchissent la lumière moins efficacement que les touches situées plus loin de la source de lumière où lesdites touches sont uniformément visibles telles que perçues par l'utilisateur.

2. Pavé numérique ou clavier selon la revendication 1, **caractérisé en ce que** ladite surface réfléchissante forme le caractère sur la touche.

3. Pavé numérique ou clavier selon la revendication 1, **caractérisé en ce que** ladite surface réfléchissante recouvre la touche elle-même, sans former le caractère sur la touche.

4. Pavé numérique ou clavier selon la revendication 1, **caractérisé en ce que** ladite surface réfléchissante est fabriquée dans un matériau métallique.

5. Pavé numérique ou clavier selon la revendication 1, **caractérisé en ce que** ladite surface réfléchissante est fabriquée dans une matière plastique.

6. Pavé numérique ou clavier selon la revendication 1, **caractérisé en ce que** ladite surface réfléchissante est fabriquée dans un matériau en verre.

7. Pavé numérique ou clavier selon la revendication 1, **caractérisé en ce que** la surface réfléchissante fournie sur certaines desdites touches est plus texturée par rapport aux surfaces réfléchissantes fournies sur d'autres touches.

8. Pavé numérique ou clavier selon la revendication 1, **caractérisé en ce que** le matériau utilisé sur la surface réfléchissante de certaines touches n'est pas aussi intensif que celui fourni sur la surface réfléchissante d'autres touches.

9. Pavé numérique ou clavier selon la revendication 1, **caractérisé en ce que** la surface réfléchissante fournie sur certaines desdites touches occupe moins de surface par rapport à d'autres surfaces réfléchissantes fournies sur d'autres touches.

10. Pavé numérique ou clavier selon la revendication 1, **caractérisé en ce que** différents matériaux sont utilisés sur les surfaces réfléchissantes sur les touches du clavier.

11. Pavé numérique ou clavier selon la revendication 1, **caractérisé en ce que** les touches du clavier sont dotées d'angles de positionnement individuels en fonction de leur emplacement individuel sur le clavier.

12. Pavé numérique ou clavier selon la revendication 11, **caractérisé en ce que** les touches sur les côtés latéraux du clavier sont inclinées vers le centre et sont dotées d'angles de positionnement spécifiques à cet effet.

13. Pavé numérique ou clavier selon la revendication 11, **caractérisé en ce qu'**il s'agit d'un clavier comprenant des touches dotés d'angles de positionnement qui permettent à la lumière émanant du point central de ladite source de lumière d'arriver jusqu'à l'oeil de l'utilisateur.
